# EUROPEAN PATENT APPLICATION

(11) **EP 4 622 237 A1**
(43) Date of publication of application: **24.09.2025**
(21) Application number: 24196479.0
(22) Date of filing: 26.08.2024
(51) Int. Cl.: H04N 1/00, G06T 7/00

(54) **INFORMATION PROCESSING SYSTEM, INFORMATION PROCESSING PROGRAM, AND INFORMATION PROCESSING METHOD**

(30) Priority: 22.03.2024 JP 2024047162
(71) Applicant: FUJIFILM Business Innovation Corp., Minato-ku Tokyo (JP)
(72) Inventor: AGEHAMA, Ryo, Yokohama-shi, Kanagawa (JP)
(74) Representative: Kurig, Thomas

(57) **Abstract**

An information processing system includes a processor configured to acquire verification data of an inspection target object consisting of plural media after image formation, and images scanned from the inspection target object by an image scanning portion, and verify at least one of a defect in a direction or a defect in an order of the images of the inspection target object based on the images scanned by the image scanning portion and on the verification data.

## Description

### BACKGROUND OF THE INVENTION

### (i) Field of the Invention

The technology of the present disclosure relates to an information processing system, an information processing program, and an information processing method.

### (ii) Description of Related Art

An article inspection system using the multifunction printer according to JP2012-83449A includes a printing section that prints printing data, a scanning section that scans a document printed by the printing section, an image comparison section that compares an image generated from the printing data for performing printing via the printing section with an image scanned by the scanning section, an NG processing section in a case where the image comparison section determines that the images are different (= NG), a printing order/direction adjustment section that adjusts a direction and an order of pages to be reprinted by considering a sheet discharge characteristic of a scanner in reprinting the image determined as NG by the NG processing section, an NG page detection section that detects a page determined as NG by the NG processing section, and a sheet control section that controls a sheet discharge destination of a sheet and feeding of the sheet in accordance with a determination result of the NG page detection section.

### SUMMARY OF THE INVENTION

An object of the present disclosure is to provide an information processing system that verifies at least one of a defect in a direction or a defect in an order of an image of an inspection target object even in a case where a plurality of media after image formation that form an inspection target object are subjected to the image formation at different timings and are retrospectively combined.

According to a first aspect of the present disclosure, there is provided an information processing system including a processor configured to acquire verification data of an inspection target object consisting of a plurality of media after image formation, and images scanned from the inspection target object by an image scanning portion, and verify at least one of a defect in a direction or a defect in an order of the images of the inspection target object based on the images scanned by the image scanning portion and on the verification data.

According to a second aspect of the present disclosure, in the information processing system according to the first aspect, the processor may be configured to, in a case where the images of the inspection target object are formed on both sides of the media, cause the image scanning portion to scan only one surface of the media and verify at least one of the defect in the direction or the defect in the order of the images of the inspection target object based on the images of the one surface and on the verification data.

According to a third aspect of the present disclosure, in the information processing system according to the first or second aspect, the processor may be configured to verify the defect in the direction and the defect in the order of the images of the inspection target object based on the images scanned by the image scanning portion and on the verification data.

According to a fourth aspect of the present disclosure, in the information processing system according to any one of the first to third aspects, the processor may be configured to verify excess or deficiency of the inspection target object based on the images scanned by the image scanning portion and on the verification data.

According to a fifth aspect of the present disclosure, in the information processing system according to any one of the first to fourth aspects, the processor may be configured to, in verifying at least one of the defect in the direction or the defect in the order of the images of the inspection target object, not verify quality of the images of the inspection target object.

According to a sixth aspect of the present disclosure, in the information processing system according to any one of the first to fifth aspects, the processor may be configured to use the verification data having reduced resolution compared to the images scanned by the image scanning portion.

According to a seventh aspect of the present disclosure, in the information processing system according to any one of the first to sixth aspects, the processor may be configured to present a method of resolving abnormality based on a verification result of the verified inspection target object.

According to an eighth aspect of the present disclosure, in the information processing system according to the seventh aspect, the processor may be configured to store original data of images used for the image formation by the image forming portion, and in presenting the method of resolving the abnormality, display the original data or the verification data generated based on the original data to a user together with the verification result.

According to a ninth aspect of the present disclosure, there is provided an information processing program causing a computer to execute a process including acquiring verification data of an inspection target object consisting of a plurality of media after image formation, and images scanned from the inspection target object by an image scanning portion, and verifying at least one of a defect in a direction or a defect in an order of the images of the inspection target object based on the images scanned by the image scanning portion and on the verification data.

According to a tenth aspect of the present disclosure, there is provided an information processing method including acquiring verification data of an inspection target object consisting of a plurality of media after image formation, and images scanned from the inspection target object by an image scanning portion, and verifying at least one of a defect in a direction or a defect in an order of the images of the inspection target object based on the images scanned by the image scanning portion and on the verification data.

According to the first, ninth, or tenth aspect of the present disclosure, even in a case where the plurality of media after the image formation forming the inspection target object are subjected to the image formation at different timings and are retrospectively combined, at least one of the defect in the direction or the defect in the order of the images of the inspection target object can be verified.

According to the second aspect of the present disclosure, in a case where the images are formed on both sides of the media, an inspection time is shortened compared to the inspection time in a configuration of verifying both sides of the media.

According to the third aspect of the present disclosure, even in a case where the plurality of media after the image formation forming the inspection target object are subjected to the image formation at different timings and are retrospectively combined, the defect in the direction and the defect in the order of the images of the inspection target object can be verified.

According to the fourth aspect of the present disclosure, the excess or deficiency of the inspection target object can be verified.

According to the fifth aspect of the present disclosure, the inspection time is shortened compared to the inspection time in a configuration of verifying the quality of the images of the inspection target object.

According to the sixth aspect of the present disclosure, a verification time is shortened compared to the verification time in a configuration of using the verification data having the same resolution as the images scanned by the image scanning portion.

According to the seventh aspect of the present disclosure, a time required for the user to resolve the abnormality is shortened compared to the time in a configuration of presenting only the verification result.

According to the eighth aspect of the present disclosure, abnormality resolution work performed by the user is facilitated compared to the work in a configuration of notifying the user of only an instruction for improvement.

### BRIEF DESCRIPTION OF THE DRAWINGS

Exemplary embodiment(s) of the present invention will be described in detail based on the following figures, wherein:
Fig. 1 is a diagram of a summary of an inspection system according to an exemplary embodiment of the technology of the present disclosure;
Fig. 2 is a block diagram illustrating a hardware configuration of the inspection system according to the present exemplary embodiment;
Fig. 3 is a sequence diagram from setting to inspection of an inspection target object in the inspection system according to the present exemplary embodiment;
Fig. 4 is a flowchart of inspection in an information processing program according to the present exemplary embodiment; and
Fig. 5 is an example of display to a user by a controller according to the present exemplary embodiment.

### DETAILED DESCRIPTION OF THE INVENTION

Hereinafter, an example of an exemplary embodiment of the technology of the present disclosure will be described with reference to the drawings. Identical or equivalent constituents and parts are designated by identical reference numerals in each drawing.

### <Configuration of Exemplary Embodiment>

### (Inspection System)

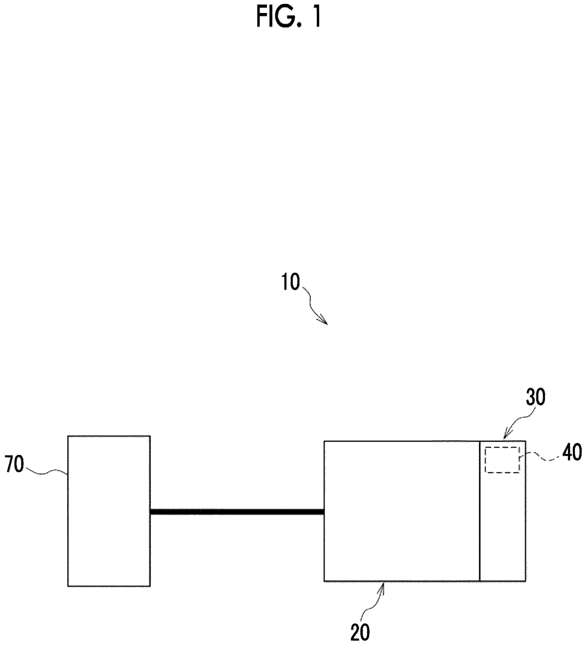

Fig. 1 is a diagram of a summary of an inspection system 10 according to the exemplary embodiment of the technology of the present disclosure. The inspection system 10 is configured as an image forming system, and the image forming system is used as a system for inspecting an inspection target object that is completed by combining a plurality of recording media (not illustrated) on which images are formed at different timings into one. The recording media are an example of media. Specifically, in a situation where a user combines the plurality of recording media on which the images are formed at different timings into one while considering a direction and an order of the images and the front and the back of the recording media, the inspection system 10 inspects the inspection target object by verifying a defect in the direction, a defect in the order, and excess or deficiency of the images via a controller 70 (described later). In the present specification, the defect in the direction, the defect in the order, and the excess or deficiency of the images may be collectively referred to as "abnormality", and a state without the abnormality will be referred to as "normality". The inspection system 10 includes an image forming apparatus 20, a verification apparatus 30, and the controller 70.

### ((Image Forming Apparatus))

The image forming apparatus 20 is an apparatus that forms the images on the recording media (not illustrated) or transports the inspection target object based on job data (hereinafter, referred to as original data) transmitted from the controller 70. The image forming apparatus 20 is an example of an image forming portion. For example, an electrophotographic image forming apparatus that forms the images on the recording media using toner is used as the image forming apparatus 20. The image forming apparatus 20 may be an inkjet type image forming apparatus, and various image forming apparatuses can be used. In the ink jet type image forming apparatus, for example, the images are formed on the recording media by ejecting ink droplets to the recording media from an ejection portion (not illustrated).

For example, the image forming apparatus 20 performs each step of charging, exposure, development, transfer to the recording medium, fixing, and the like. The image forming apparatus 20 stores the original data of the images used for image formation.

### ((Verification Apparatus))

In a case where the verification apparatus 30 functions as a part of the image forming system, the verification apparatus 30 is an apparatus that performs a scan of the images formed on the recording media by the image forming apparatus 20, inspects quality of the images by comparing scanned data with the original data, and produces output indicating the normality or the abnormality.

In a case where the verification apparatus 30 functions as a part of the inspection system 10, the verification apparatus 30 verifies the inspection target object transported from the image forming apparatus 20 in a state of being connected to the image forming apparatus 20. Specifically, the verification apparatus 30 includes an image scanning portion 40, performs a scan of the plurality of recording media constituting the inspection target object for each page of the recording media via the image scanning portion 40, and stores a verification result at a time of the scan in a memory together with the scanned data after the scan of all of the recording media is finished. The scan is an example of scanning, and the scanned data is an example of an image scanned by the image forming portion (described later). The verification result refers to a result at the time of the scan related to identicalness (including the direction) between images based on comparison between the scanned data of the inspection target object and verification data.

The memory is not limited to being inside the verification apparatus 30. The controller 70 (described later) may be used, or an external server or a memory of a portable recording medium may be used. The image scanning portion 40 is not limited to being a part of the verification apparatus 30. For example, the image scanning portion 40 may be a part of the image forming apparatus 20 or may be of an external attachment type that is attachable and detachable to and from the inspection system 10.

In a case where the images are formed on both sides of the recording medium, the image scanning portion 40 performs a scan of the images on both sides. The image scanning portion 40 can also perform a scan of only one surface.

### ((Controller))

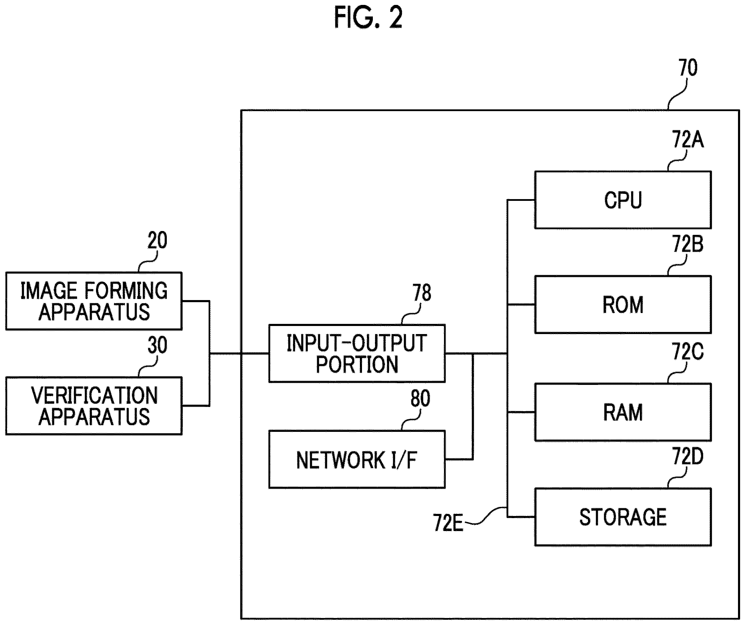

As illustrated in Figs. 1 and 2, the controller 70 is connected to the image forming apparatus 20 and the verification apparatus 30 in a wired or wireless manner.

In a case where the controller 70 functions as a part of the image forming system, the controller 70 controls overall image formation on the recording medium. Specifically, the controller 70 receives a job of the image formation, outputs an image forming instruction to the image forming apparatus 20 based on the job, receives the verification result of image quality from the verification apparatus 30, and displays the verification result on a user interface (not illustrated).

In a case where the controller 70 functions as a part of the inspection system 10, the controller 70 inspects the inspection target object by generating the verification data, instructing the image forming apparatus 20 to transport the inspection target object, and instructing the verification apparatus 30 to perform verification. The verification data is data for comparing the identicalness (including the direction) between the scanned data and the images at a time of inspection and has reduced resolution compared to the original data. The controller 70 does not verify the quality of the images formed on the inspection target object.

As illustrated in Fig. 2, the controller 70 includes each configuration of a central processing unit (CPU) 72A, a read only memory (ROM) 72B, a random access memory (RAM) 72C, a storage 72D, an input-output portion 78, and a network interface (network I/F) 80. These configurations are connected to be capable of communicating with each other via a bus 72E. The controller 70 is an example of an information processing system.

The CPU 72A is a central processing unit and executes various programs or controls each portion. That is, the CPU 72A reads out a program from the ROM 72B or the storage 72D and executes the program using the RAM 72C as a work region. The CPU 72A is an example of a processor, and a control program executed by the CPU 72A is an example of an information processing program. The CPU 72A controls each configuration and performs various operation processes in accordance with the program recorded in the ROM 72B or the storage 72D.

The ROM 72B stores various programs and various types of data. The RAM 72C temporarily stores a program or data as the work region. The storage 72D is configured with a hard disk drive (HDD) or a solid state drive (SSD) and stores various programs including an operating system and various types of data.

The input-output portion 78 receives a signal between each constituent of the inspection system 10 for functioning of the image forming system and the inspection system 10.

The network I/F 80 is an interface for communicating with other apparatuses such as a database and a server (not illustrated). For example, a standard such as Ethernet (registered trademark), FDDI, or Wi-Fi (registered trademark) is used.

As described above, the inspection system 10 inspects the inspection target object via the image forming apparatus 20.

### [Sequence of Inspection System]

Next, a sequence in a state where each constituent in the inspection system 10 functions will be described.

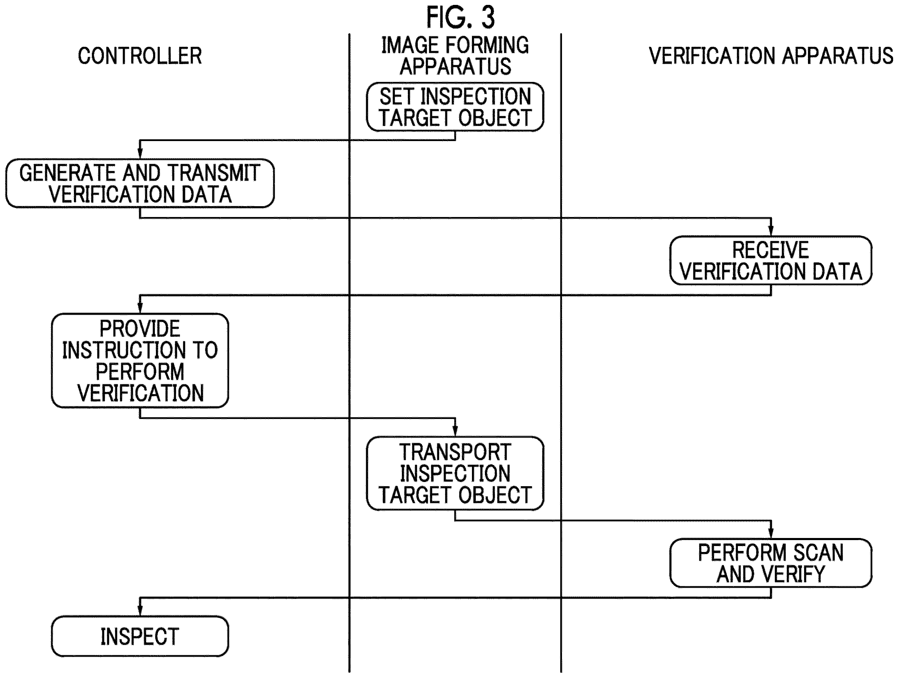

As illustrated in Fig. 3, the inspection target object is set in the image forming apparatus 20. Specifically, the inspection target object is set by storing the inspection target object in a tray (not illustrated) of the image forming apparatus 20.

In a case where the inspection target object is set in the image forming apparatus 20, the controller 70 generates the verification data based on the original data. The controller 70 transmits the generated verification data to the verification apparatus 30.

After the verification apparatus 30 receives the verification data, the controller 70 instructs the image forming apparatus 20 to perform verification.

The image forming apparatus 20 transports the inspection target object stored in the tray to the verification apparatus 30 via a transport path. Examples of the inspection target object include a bundle of recording media in which a part of the images formed on the plurality of recording media by the image forming apparatus 20 as a part of the image forming system shows quality abnormality and in which a recording medium of the abnormal image is manually replaced with a recording medium of a normal image formed at a different timing by the user. In such a bundle of recording media, a deviation from the original data may occur in a page order, a direction, and the front and the back of the recording media.

The verification apparatus 30 starts the scan of the inspection target object transported from the image forming apparatus 20 for each page of the recording media via the image scanning portion 40. The verification apparatus 30 performs verification by comparing the scanned data scanned for each page of the recording media with the verification data and stores the verification result of the inspection target object. The verification apparatus 30 continues performing verification and storing the verification result as long as the image scanning portion 40 generates the scanned data. In a case where the image scanning portion 40 does not generate the scanned data anymore, the verification apparatus 30 notifies the controller 70 of the stored verification result. While the verification apparatus 30 notifies the controller 70 of the verification result in the present exemplary embodiment, the present disclosure is not limited to this. For example, the controller 70 that has acquired the scanned data and the original data or the verification data may generate the verification result.

The controller 70 acquires the verification result from the verification apparatus 30 and inspects the verification result.

### [Details of Inspection]

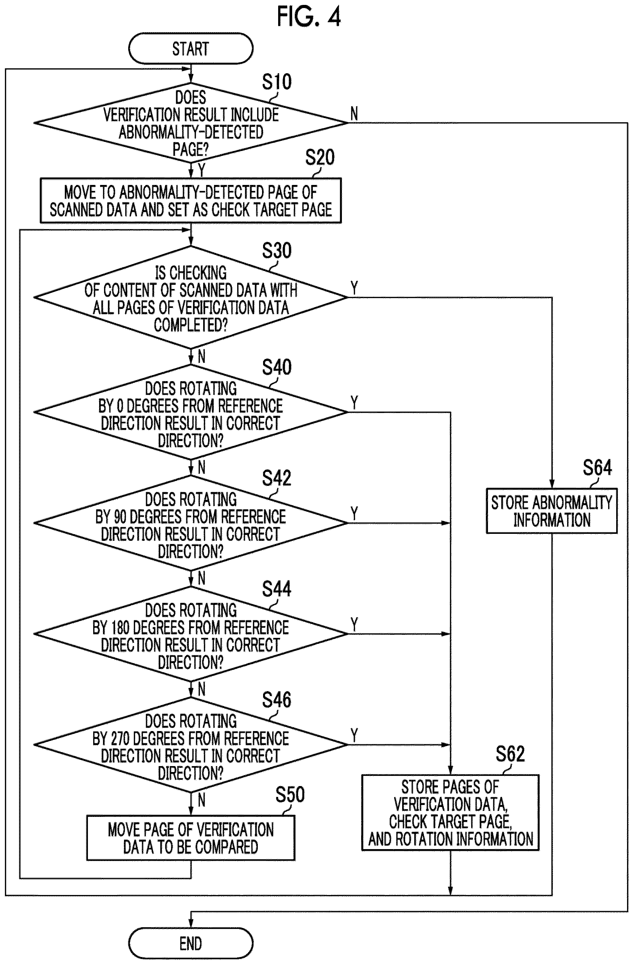

Next, details of inspection of the inspection target object by the controller 70 will be described with reference to Fig. 4.

In step S10, the CPU 72A of the controller 70 determines whether or not the verification result includes an abnormality-detected page.

In a case where a determination result is "Y" indicating a positive determination, the CPU 72A transitions to step S20 assuming that the inspection target object includes any type of abnormality.

In step S20, the CPU 72A moves to the abnormality-detected page of the scanned data and sets the abnormality-detected page as a check target page. The CPU 72A transitions to step S30.

In a case where the CPU 72A has transitioned to step S30, the CPU 72A determines whether or not checking of content of the scanned data with all pages of the verification data is completed. Here, all pages mean only the verification data corresponding to the abnormality-detected page of the scanned data as a target. However, all pages of the verification data may be targeted regardless of the abnormality-detected page of the scanned data.

### [[Rotation by 0 Degrees]]

In a case where the determination result in step S30 is "N", the CPU 72A transitions to step S40 and determines whether or not rotating the scanned data by 0 degrees from a reference direction results in a correct direction. The reference direction refers to a single direction designated by the user (not illustrated).

### [[Rotation by 90 Degrees]]

In a case where the determination result in step S40 is "N", the CPU 72A transitions to step S42 and determines whether or not rotating the scanned data by 90 degrees from the reference direction results in a correct direction. Details of step S62 in a case where the determination result is "Y" will be described later.

### [[Rotation by 180 degrees]]

In a case where the determination result in step S42 is "N", the CPU 72A transitions to step S44 and determines whether or not rotating the scanned data by 180 degrees from the reference direction results in a correct direction.

### [[Rotation by 270 Degrees]]

In a case where the determination result in step S44 is "N", the CPU 72A transitions to step S46 and determines whether or not rotating the scanned data by 270 degrees from the reference direction results in a correct direction.

In a case where the determination result in step S46 is "N", the CPU 72A transitions to step S50. In this case, the content (image) of the scanned data set as the check target page includes the abnormality. Specifically, since rotating the image of the scanned data set as the check target page does not result in a correct direction, the CPU 72A determines that there is another type of abnormality other than the defect in the direction of the images, and transitions to step S50.

In step S50, the CPU 72A moves a page of the verification data to be compared with the check target page. Specifically, the CPU 72A moves from the current page to another page of the verification data in order to determine whether or not the scanned data set as the check target page is at a correct position on the other page in the entire inspection target object (verification data), that is, in a correct order. The CPU 72A transitions to step S30.

### [[Step S62]]

Step S62 will be described. In a case where the determination result in any of step S40, step S42, step S44, or step S46 is "Y", the CPU 72A transitions to step S62. Specifically, rotating the content (image) of the scanned data set as the check target page results in a correct direction of the image of the scanned data, and correcting the defect in the direction of the images results in the normality.

Therefore, in step S62, the CPU 72A stores the pages of the verification data, the page of the scanned data set as the check target page, and rotation information.

In a case where the determination result in step S30 is "Y", the CPU 72A transitions to step S64 and stores abnormality information including at least information indicating that there is no image matching the verification data on the check target page, and a resolution suggestion for resolving the abnormality.

In any of a case where a process in step S62 is finished or a case where a process in step S64 is finished, inspection of the current check target page is finished. Thus, the CPU 72A transitions to step S10 in which presence or absence of the abnormality-detected page is determined.

Finally, in step S10, in a case where the determination result is "N" indicating a negative determination, the CPU 72A finishes the flow.

### [Example of Display of Verification Result]

In the inspection system 10 of the present exemplary embodiment, the verification result can be displayed on a display portion (not illustrated). The inspection system 10 presents a method of resolving the abnormality to the user based on the verification result of the verified inspection target object. The display portion may be one of constituents of the inspection system 10 or may be incorporated as a part of the constituents.

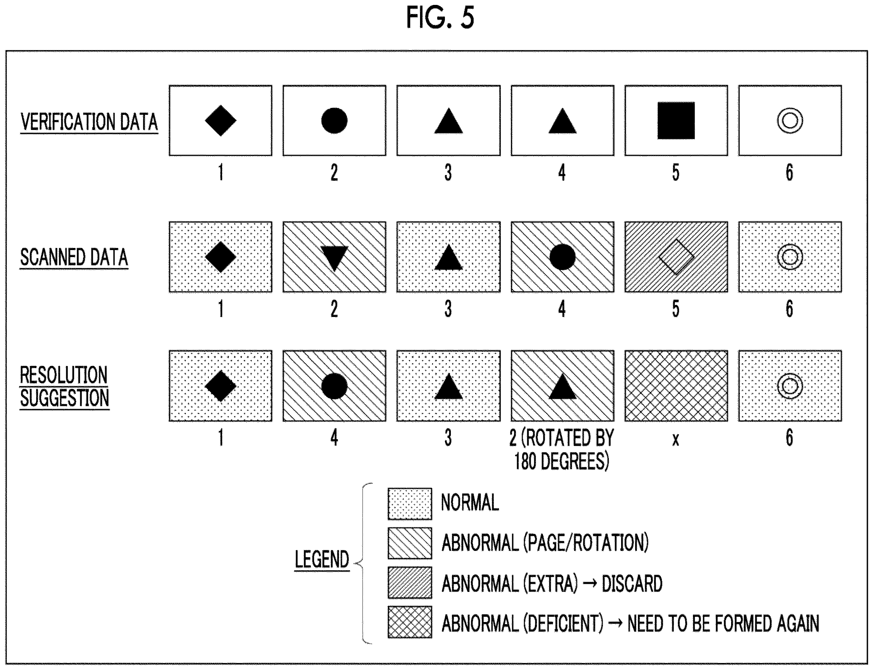

An assumption of Fig. 5 will be described. The inspection target object is a bundle obtained by combining six recording media on which the images are formed at different timings into one by the user. That is, the inspection target object is configured with a total of 6 pages. As illustrated in Fig. 5, the verification result is presented together with the verification data, the scanned data related to the verification result, and the resolution suggestion indicating the method of resolving the abnormality. The verification data, the scanned data, and the resolution suggestion are not limited to display positions and display methods illustrated in Fig. 5. The original data may be presented instead of the verification data.

### [[Verification Data]]

The verification data is displayed for each page of the recording media. In the present exemplary embodiment, the verification data is displayed for all of the six pages in a state where each page is disposed side by side. A corresponding page number is displayed below an image corresponding to each page. In the present exemplary embodiment, page numbers of 1 to 6 in an ascending order from the left are displayed below the images corresponding to each page.

### [[Scanned Data]]

The scanned data is displayed in an order of the scan and is disposed below the verification data. In the present exemplary embodiment, the scanned data is displayed for all of the six pages in a state where each page is disposed side by side. A corresponding page number is displayed below an image corresponding to each page. The scanned data also includes a display indicating the verification result of each page. In the present exemplary embodiment, each page of the recording media is provided with a pattern corresponding to the verification result.

The patterns are classified into four types of (i) "normal" indicating that the verification result is normal, (ii) "abnormal (page/rotation)" indicating that an operation that results in a correct direction and a correct order of the images is necessary, (iii) "abnormal (extra)" indicating that an extra image is included as the inspection target object and needs to be discarded, and (iv) "abnormal (deficient)" indicating that an image deficient as the inspection target object is present and the image needs to be formed again. While classification is performed using the patterns in the present specification, the present disclosure is not limited to this. For example, classification may be performed using colors, sizes, or other highlighting methods instead of the patterns.

### [[Resolution Suggestion]]

The resolution suggestion displays information indicating the defect in the direction, the defect in the order, and the excess or deficiency of the images and is disposed below the scanned data. In the present exemplary embodiment, the resolution suggestion is displayed for all of the six pages in a state where each page is disposed side by side. A page number and the rotation information for resolving the abnormality are displayed below an image corresponding to each page. The resolution suggestion also includes a display indicating the verification result of each page. In the present exemplary embodiment, each page of the recording media is provided with a pattern corresponding to the verification result.

### <Action and Effect>

Content of the flowchart in Fig. 4 for the inspection system 10 of the present exemplary embodiment will be described using an example illustrated in Fig. 5.

In the example, the inspection target object related to the scanned data is recording media configured with a total of 6 pages. In the image scanning portion 40 of the verification apparatus 30, a scan of the pages of the recording media is performed for all of the six pages, and the verification result is stored for each recording medium (refer to Fig. 3).

### (Checking of Second Page of Scanned Data with Second Page of Verification Data)

The verification result includes abnormality-detected pages of three pages (the second, fourth, and fifth pages) among all of the six pages. Thus, the CPU 72A determines that the determination result is "Y" in step S10 and transitions to step S20.

In step S20, the CPU 72A moves to the second page of the scanned data as the first abnormality-detected page, sets the second page of the scanned data as the check target page, and transitions to step S30.

In step S30, checking of the content (image) of the second page of the scanned data with all of the three pages (the second, fourth, and fifth pages) of the verification data corresponding to the abnormality-detected pages of the scanned data is not completed. Thus, the CPU 72A transitions to step S40.

In step S40, the CPU 72A determines whether or not rotating the second page of the scanned data by 0 degrees from the reference direction of the verification data results in a correct direction with respect to the second page of the verification data. In the present exemplary embodiment, the determination result in step S40 is "N". Thus, the CPU 72A transitions to step S42. Then, the determination result is also "N" in any of step S42 to step S46. Thus, the CPU 72A transitions to step S50.

In step S50, the CPU 72A moves the page of the verification data to be compared with the check target page (the second page of the scanned data) from the current second page to the next fourth page. The CPU 72A transitions to step S30.

### (Checking of Second Page of Scanned Data with Fourth Page of Verification Data)

In step S30, checking of the content of the second page of the scanned data with the fourth page and the fifth page of the verification data is not completed. Thus, the CPU 72A makes a determination indicating "N" and transitions to step S40.

In step S40, rotating the content of the second page of the scanned data by 0 degrees from the reference direction in the fourth page of the verification data does not result in a correct direction. Thus, the CPU 72A makes a determination indicating "N" and transitions to step S42. In step S42, the CPU 72A also makes a determination indicating "N" and transitions to step S44.

In step S44, rotating the content of the check target page (the second page of the scanned data) by 180 degrees from the reference direction in the fourth page of the verification data results in a correct direction (a direction in which a triangular mark is upright). Thus, the CPU 72A makes a determination indicating "Y" and transitions to step S62.

In step S62, the CPU 72A stores information for moving the second page of the scanned data set as the check target page to the fourth page of the resolution suggestion in a state where the second page of the scanned data is rotated by 180 degrees from the reference direction. The CPU 72A transitions to step S10.

### (Checking of Fourth Page of Scanned Data with Second Page of Verification Data)

In step S10, the fourth page and the fifth page of the scanned data are left as the abnormality-detected page in the verification result. Thus, the CPU 72A makes a determination indicating "Y" and transitions to step S20. In step S20, the CPU 72A moves to the fourth page of the scanned data and sets the fourth page as the check target page.

Then, in a case where the same flow proceeds with the fourth page of the scanned data as the check target page, the CPU 72A makes a determination indicating "Y" in step S40 and transitions to step S62.

In step S62, the CPU 72A stores information for moving the fourth page of the scanned data set as the check target page to the second page of the resolution suggestion in a state where the fourth page of the scanned data is rotated by 0 degrees from the reference direction (a state of the current direction of the image). The CPU 72A transitions to step S10.

### (Checking of Fifth Page of Scanned Data with Fifth Page of Verification Data)

In step S10, the fifth page of the scanned data is left as the abnormality-detected page in the verification result. Thus, the CPU 72A makes a determination indicating "Y" and transitions to step S20. In step S20, the CPU 72A moves to the fifth page of the scanned data and sets the fifth page as the check target page. The CPU 72A transitions to step S30.

In step S30, checking of the content of the fifth page of the scanned data with the fifth page of the verification data is not completed. Thus, the CPU 72A makes a determination indicating "N" and transitions to step S40.

In step S40, rotating the content of the fifth page of the scanned data by 0 degrees from the reference direction in the fifth page of the verification data does not result in a correct direction. Thus, the CPU 72A makes a determination indicating "N" and transitions to step S42. The CPU 72A also makes a determination indicating "N" in step S42 to step S46 and transitions to step S50.

In step S50, the CPU 72A moves the page of the verification data to be compared with the check target page (the fifth page of the scanned data) from the current fifth page and transitions to step S30.

In step S30, checking of the content of the scanned data with all of the pages (the second, fourth, and fifth pages) of the verification data is completed. Thus, the CPU 72A makes a determination indicating "Y" and transitions to step S64.

In step S64, the CPU 72A stores the abnormality information. The abnormality information in the present exemplary embodiment is set as follows (refer to Fig. 5).
(1) The fourth page of the scanned data is moved to the second page of the resolution suggestion in a state where the fourth page of the scanned data is rotated by 0 degrees from the reference direction.
(2) The second page of the scanned data is moved to the fourth page of the resolution suggestion in a state where the second page of the scanned data is rotated by 180 degrees from the reference direction.
(3) The abnormality indicating a deficient image is shown on the fifth page of the resolution suggestion.
(4) The abnormality indicating an extra image is shown on the fifth page of the scanned data.

The CPU 72A transitions to step S10.

Finally, in step S10, the abnormality-detected page is not left. Thus, the CPU 72A makes a determination indicating "N", and the flow is finished.

### <Action and Effect>

In combining the plurality of recording media into one, the defect in the direction, the defect in the order, and the excess or deficiency of the images may occur in the inspection target object to be inspected by the inspection system 10. Therefore, an action and an effect of the inspection system 10 according to the present exemplary embodiment will be described.

The controller 70 of the present exemplary embodiment acquires the verification data of the inspection target object consisting of the plurality of recording media after the image formation and the images scanned from the inspection target object by the image scanning portion 40, and verifies at least one of the defect in the direction or the defect in the order of the images of the inspection target object based on the images scanned by the image scanning portion 40 and on the verification data. The control program executed by the CPU 72A of the present exemplary embodiment causes a computer to execute a process including receiving the verification data of the inspection target object consisting of the plurality of recording media after the image formation, causing the image scanning portion 40 that performs a scan of the images formed by the image forming apparatus 20 to perform the scan of the images of the inspection target object, and verifying at least one of the defect in the direction or the defect in the order of the images of the inspection target object based on the images scanned by the image scanning portion 40 and on the verification data.

As described above, even in a case where the plurality of recording media after the image formation forming the inspection target object are subjected to the image formation at different timings and are retrospectively combined, at least one of the defect in the direction or the defect in the order of the images of the inspection target object may be verified by the controller 70 or the control program executed by the CPU 72A.

The controller 70 of the present exemplary embodiment verifies the defect in the direction and the defect in the order of the images of the inspection target object based on the images scanned by the image scanning portion 40 and on the verification data. Accordingly, even in a case where the plurality of media after the image formation forming the inspection target object are subjected to the image formation at different timings and are retrospectively combined, the defect in the direction and the defect in the order of the images of the inspection target object may be verified.

The controller 70 of the present exemplary embodiment verifies the excess or deficiency of the inspection target object based on the images scanned by the image scanning portion 40 and on the verification data. Accordingly, the excess or deficiency of the inspection target object may be verified.

The controller 70 of the present exemplary embodiment does not verify the quality of the images of the inspection target object in verifying at least one of the defect in the direction or the defect in the order of the images of the inspection target object. Accordingly, an inspection time is shortened compared to the inspection time in a configuration of verifying the quality of the images of the inspection target object.

In the controller 70 of the present exemplary embodiment, the processor uses the verification data having reduced resolution compared to the images scanned by the image scanning portion 40. Accordingly, a verification time is shortened compared to the verification time in a configuration of using the verification data having the same resolution as the images scanned by the image scanning portion 40.

The controller 70 of the present exemplary embodiment presents the method of resolving the abnormality based on the verification result of the verified inspection target object. Accordingly, a time required for the user to resolve the abnormality is shortened compared to the time in a configuration of presenting only the verification result.

The controller 70 of the present exemplary embodiment stores the original data of the images used for the image formation by the image forming apparatus 20 and displays the original data or the verification data generated based on the original data to the user together with the verification result in presenting the method of resolving the abnormality. Accordingly, abnormality resolution work performed by the user is facilitated compared to the work in a configuration of notifying the user of only an instruction for improvement.

### <Modification Example>

While the exemplary embodiment of the present disclosure has been described above with reference to the drawings, people having ordinary knowledge in the technical field of the present disclosure will perceive various modification examples or application examples within the scope of the technical idea according to the claims, and these examples are also understood as falling within the technical scope of the present disclosure.

### <<First Modification Example>>

The inspection system 10 is also applicable to a case where the images of the inspection target object are formed on both sides of the recording media.

In Fig. 3, for the recording media of which the images are formed on both sides, the image scanning portion 40 of the verification apparatus 30 performs a scan of the images on only one surface out of both sides. Next, the controller 70 starts inspection.

Next, Fig. 4 will be referred to for description. In a case where the verification result includes the abnormality-detected page in step S10, the CPU 72A of the controller 70 transitions to step S20.

In step S20, the CPU 72A moves to the abnormality-detected page of the scanned data obtained by performing a scan of only one surface, sets the abnormality-detected page as the check target page, and transitions to step S30.

In step S30, the CPU 72A compares the content of the scanned data obtained by performing a scan of only one surface with the verification data for both sides in order and finally finishes the flow.

As described above, in a case where the images of the inspection target object are formed on both sides of the recording media, the controller 70 according to the first modification example causes the image scanning portion 40 to scan only one surface of the recording media and verifies at least one of the defect in the direction or the defect in the order of the images of the inspection target object based on the images of the one surface and on the verification data. According to the first modification example, in a case where the images are formed on both sides of the recording media, the inspection time is shortened compared to the inspection time in a configuration of verifying both sides of the recording media.

In the first modification example, an instruction for the user to reverse the scanned data may be added to the exemplary embodiment as the method of resolving the abnormality.

### <<Other Modification Examples>>

While the inspection target object is obtained by combining the plurality of recording media into one, a combining method may be any of combining by input provided by the user or combining by a specific apparatus.

In the exemplary embodiment, inspection of the inspection target object is determination of the order of the images after determination of the direction of the images. However, the present disclosure is not limited to this. For example, the direction of the images may be determined after determining the order of the images. The excess or deficiency of the images is determined after the direction and the order of the images. In this case, the excess or deficiency of the images may be determined by comparing the number of pages of the scanned data with the number of pages of the verification data.

In the exemplary embodiment, the image forming apparatus 20 stores the original data of the images used for the image formation in the inspection system 10. However, the present disclosure is not limited to this. For example, in a case where an image forming apparatus outside the inspection system 10 uses the original data of the images used for the image formation, the inspection system 10 may store the verification data generated based on the original data.

In the exemplary embodiment, the inspection system 10 includes a single image forming apparatus 20. However, the present disclosure is not limited to this. The inspection system 10 may include a plurality of image forming apparatuses. In this case, even in a case where only a part of the image forming apparatuses includes the verification apparatus 30, the inspection target object can also be inspected in the rest of the image forming apparatuses by sharing the verification data.

The above process can also be implemented by a dedicated hardware circuit. In this case, the process may be executed by one piece of hardware or may be executed by a plurality of pieces of hardware.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The program that causes the controller 70 to operate may be provided by a computer readable recording medium such as a universal serial bus (USB) memory, a flexible disk, or a compact disc read only memory (CD-ROM) or may be provided online via a network such as the internet. In this case, the program recorded on the computer readable recording medium is normally transmitted to a memory, a storage, or the like and stored. The program, for example, may also be provided as standalone application software or may be incorporated into software of each device of the controller 70 as a function of the controller 70.

### <Supplementary Note>

(((1))) An information processing system comprising:
   a processor configured to:
   acquire verification data of an inspection target object consisting of a plurality of media after image formation, and images scanned from the inspection target object by an image scanning portion; and
   verify at least one of a defect in a direction or a defect in an order of the images of the inspection target object based on the images scanned by the image scanning portion and on the verification data.
(((2))) The information processing system according to (((1))), wherein the processor is configured to:
   in a case where the images of the inspection target object are formed on both sides of the media, cause the image scanning portion to scan only one surface of the media and verify at least one of the defect in the direction or the defect in the order of the images of the inspection target object based on the images of the one surface and on the verification data.
(((3))) The information processing system according to (((1))) or (((2))), wherein the processor is configured to:
   verify the defect in the direction and the defect in the order of the images of the inspection target object based on the images scanned by the image scanning portion and on the verification data.
(((4))) The information processing system according to any one of (((1))) to (((3))), wherein the processor is configured to:
   verify excess or deficiency of the inspection target object based on the images scanned by the image scanning portion and on the verification data.
(((5))) The information processing system according to any one of (((1))) to (((4))), wherein the processor is configured to:
   in verifying at least one of the defect in the direction or the defect in the order of the images of the inspection target object, not verify quality of the images of the inspection target object.
(((6))) The information processing system according to any one of (((1))) to (((5))), wherein the processor is configured to:
   use the verification data having reduced resolution compared to the images scanned by the image scanning portion.
(((7))) The information processing system according to any one of (((1))) to (((6))), wherein the processor is configured to:
   present a method of resolving abnormality based on a verification result of the verified inspection target object.
(((8))) The information processing system according to (((7))), wherein the processor is configured to:
   store original data of images used for the image formation by the image forming portion; and
   in presenting the method of resolving the abnormality, display the original data or the verification data generated based on the original data to a user together with the verification result.
(((9))) An information processing program causing a computer to execute a process comprising:
   acquiring verification data of an inspection target object consisting of a plurality of media after image formation, and images scanned from the inspection target object by an image scanning portion; and
   verifying at least one of a defect in a direction or a defect in an order of the images of the inspection target object based on the images scanned by the image scanning portion and on the verification data.

According to the information processing system of (((1))) or the information processing program of (((9))), even in a case where the plurality of media after the image formation forming the inspection target object are subjected to the image formation at different timings and are retrospectively combined, at least one of the defect in the direction or the defect in the order of the images of the inspection target object can be verified.

According to the information processing system of (((2))), in a case where the images are formed on both sides of the media, an inspection time is shortened compared to the inspection time in a configuration of verifying both sides of the media.

According to the information processing system of (((3)))), even in a case where the plurality of media after the image formation forming the inspection target object are subjected to the image formation at different timings and are retrospectively combined, the defect in the direction and the defect in the order of the images of the inspection target object can be verified.

According to the information processing system of (((4))), the excess or deficiency of the inspection target object can be verified.

According to the information processing system of (((5))), the inspection time is shortened compared to the inspection time in a configuration of verifying the quality of the images of the inspection target object.

According to the information processing system of (((6))), a verification time is shortened compared to the verification time in a configuration of using the verification data having the same resolution as the images scanned by the image scanning portion.

According to the information processing system of (((7))), a time required for the user to resolve the abnormality is shortened compared to the time in a configuration of presenting only the verification result.

According to the information processing system of (((8))), abnormality resolution work performed by the user is facilitated compared to the work in a configuration of notifying the user of only an instruction for improvement.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: inspection system
20: image forming apparatus
30: verification apparatus
40: image scanning portion
70: controller
72A: CPU
72B: ROM
72C: RAM
72D: storage
72E: bus
78: input-output portion
80: network I/F

## Claims

1. An information processing system comprising:
a processor configured to:
acquire verification data of an inspection target object consisting of a plurality of media after image formation, and images scanned from the inspection target object by an image scanning portion; and
verify at least one of a defect in a direction or a defect in an order of the images of the inspection target object based on the images scanned by the image scanning portion and on the verification data.

2. The information processing system according to claim 1, wherein the processor is configured to:
in a case where the images of the inspection target object are formed on both sides of the media, cause the image scanning portion to scan only one surface of the media and verify at least one of the defect in the direction or the defect in the order of the images of the inspection target object based on the images of the one surface and on the verification data.

3. The information processing system according to claim 1 or 2, wherein the processor is configured to:
verify the defect in the direction and the defect in the order of the images of the inspection target object based on the images scanned by the image scanning portion and on the verification data.

4. The information processing system according to any one of claims 1 to 3, wherein the processor is configured to:
verify excess or deficiency of the inspection target object based on the images scanned by the image scanning portion and on the verification data.

5. The information processing system according to any one of claims 1 to 4, wherein the processor is configured to:
in verifying at least one of the defect in the direction or the defect in the order of the images of the inspection target object, not verify quality of the images of the inspection target obj ect.

6. The information processing system according to any one of claims 1 to 5, wherein the processor is configured to:
use the verification data having reduced resolution compared to the images scanned by the image scanning portion.

7. The information processing system according to any one of claims 1 to 6, wherein the processor is configured to:
present a method of resolving abnormality based on a verification result of the verified inspection target object.

8. The information processing system according to claim 7, wherein the processor is configured to:
store original data of images used for the image formation by the image forming portion; and
in presenting the method of resolving the abnormality, display the original data or the verification data generated based on the original data to a user together with the verification result.

9. An information processing program causing a computer to execute a process comprising:
acquiring verification data of an inspection target object consisting of a plurality of media after image formation, and images scanned from the inspection target object by an image scanning portion; and
verifying at least one of a defect in a direction or a defect in an order of the images of the inspection target object based on the images scanned by the image scanning portion and on the verification data.

10. An information processing method comprising:
acquiring verification data of an inspection target object consisting of a plurality of media after image formation, and images scanned from the inspection target object by an image scanning portion; and
verifying at least one of a defect in a direction or a defect in an order of the images of the inspection target object based on the images scanned by the image scanning portion and on the verification data.
